(19) Europäisches Patentamt
European Patent Office
Office européen des brevets

(11) Veröffentlichungsnummer: **0 051 156**
**B1**

(12) # EUROPÄISCHE PATENTSCHRIFT

(45) Veröffentlichungstag der Patentschrift: **21.12.83**

(51) Int. Cl.³: **B 01 D 53/36**, C 07 D 251/60, C 01 C 1/12

(21) Anmeldenummer: **81107903.7**

(22) Anmeldetag: **05.10.81**

(54) **Verfahren zum gleichzeitigen Abbau von Spurenbestandteilen in den Reaktionsabgasen der Melaminsynthese.**

(30) Priorität: **03.11.80 DE 3041324**

(43) Veröffentlichungstag der Anmeldung: **12.05.82 Patentblatt 82/19**

(45) Bekanntmachung des Hinweises auf die Patenterteilung: **21.12.83 Patentblatt 83/51**

(84) Benannte Vertragsstaaten: **AT BE DE FR GB IT NL**

(56) Entgegenhaltungen:
**DE - A - 641 400**
**DE - A - 2 341 650**
**DE - B - 1 204 679**
**GB - A - 276 347**
**US - A - 2 817 580**
**US - A - 3 386 999**

(73) Patentinhaber: **BASF Aktiengesellschaft, Carl-Bosch-Strasse 38, D-6700 Ludwigshafen (DE)**

(72) Erfinder: **Blanck, Klaus, Dr., Dantestrasse 31, D-6900 Heidelberg (DE)**
Erfinder: **Dethlefsen, Winfried, Dr., Bassermannstrasse 43, D-6800 Mannheim 1 (DE)**
Erfinder: **Jungbauer, Anton, Dr., Brechlochstrasse 9, D-6700 Ludwigshafen (DE)**
Erfinder: **Leutner, Bernd, Dr., Taunusstrasse 17, D-6710 Frankenthal 4 (DE)**
Erfinder: **Schler, Ernst-Juergen, Dr., Graefenthalstrasse 14, D-6719 Altleiningen (DE)**
Erfinder: **Schlimpler, Hans-Ulrich, Dr., Im Erlich 74, D-6720 Speyer (DE)**
Erfinder: **Schneehage, Hans Henning, Dr., Plauser Strasse 10, D-6719 Weisenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 051 156 B1

BUNDESDRUCKEREI BERLIN

# Verfahren zum gleichzeitigen Abbau von Spurenbestandteilen in den Reaktionsabgasen der Melaminsynthese

Vorliegende Erfindung betrifft ein Verfahren zum gleichzeitigen Abbau der Spurenbestandteile Cyanwasserstoff, Isocyansäure, Harnstoff und Melamin in den durch thermische Umwandlung von Harnstoff zu Melamin nach Abtrennung des Melamins erhaltenen, hauptsächlich aus Ammoniak und Kohlendioxid bestehenden Reaktionsabgasen.

Es ist bekannt, daß man Melamin durch Erhitzen von Harnstoff oder seiner thermischen Zersetzungsprodukte auf Temperaturen von 350 bis 450° C bei atmosphärischem oder erhöhtem Druck bis zu etwa 10 bar in Gegenwart von Katalysatoren und zugesetztem Ammoniak oder dieses enthaltenden Gasgemischen, wie Ammoniak-Kohlendioxidgemischen, z. B. den Reaktionsabgasen der Melaminsynthese selbst, herstellen kann.

Das dampfförmige Melamin kann z. B. aus den Reaktionsgasen durch fraktionierte Kondensation gemäß der DE-B-1 204 679 durch Kühlung dieser Gase auf Temperaturen von 150 bis 250°C abgeschieden werden. Etwa nicht umgesetzter Harnstoff kann aus den Reaktionsgasen durch Waschen mit Harnstoffschmelzen entfernt werden. Die so gereinigten Abgase bestehen hauptsächlich aus Ammoniak und Kohlendioxid und enthalten als Spuren noch Cyanwasserstoff, Harnstoff bzw. Isocyansäure und Melamin.

Diese Abgase müssen zur Verwertung des in ihnen enthaltenen Ammoniaks, welches der wertbestimmende Bestandteil ist, einer erneuten Verwendung zugeführt werden. Diese kann darin bestehen, daß man das Gasgemisch in die Harnstoff-Synthese zurückführt oder daß man den Ammoniakanteil durch Reaktion mit Säuren zu Ammoniaksalzen umsetzt.

Schließlich ist es auch bekannt, das Gasgemisch in seine Hauptbestandteile Ammoniak und Kohlendioxid aufzuspalten, um das Ammoniak in reiner Form zu gewinnen (vgl. DE-A-2 646 804).

Bei all diesen Möglichkeiten zur Verarbeitung bzw. zur Aufarbeitung der Reaktionsabgase der Melaminsynthese stören aber die genannten in Spuren im Abgas enthaltenen Verbindungen, sei es, daß durch sie die gewonnenen Produkte verunreinigt werden, sei es, daß sie sich bei der Aufarbeitung der Abgase anreichern. Diese Spuren müssen daher vor der weiteren Verwertung der Abgase abgetrennt werden.

Prinzipiell wäre es denkbar, diese Spure gemeinsam oder nacheinander mittels Gaswäsche zu entfernen, wobei allerdings mit einer Reihe von Schwierigkeiten zu rechnen ist. Einmal absorbieren Waschlösungen auch Ammoniak und Kohlendioxid auf physikalischem bzw. chemischem Weg, wodurch die beiden Hauptkomponenten des Melaminabgases zumindest teilweise für die weitere wirtschaftliche Nutzung verlorengehen, wenn sie nicht in einer zusätzlichen Verfahrensstufe wiedergewonnen werden. Darüber hinaus müssen die giftigen Cyanverbindungen aus den Waschlösungen abgetrennt werden, um ihre Anreicherung zu vermeiden. Eine weitere Schwierigkeit ergibt sich daraus, daß das im wesentlichen aus $NH_3$ und $CO_2$ bestehende Abgas bereits bei Temperaturen unterhalb 100° C zu festem Ammoniumcarbamat kondensiert, daß aber auf der anderen Seite zwecks Verhinderung einer solchen Kondensation bei Temperaturen oberhalb von 100° C sich die Zusammensetzung und Wirksamkeit der Waschlösungen nachteilig verändert.

Es ist schließlich eine ganze Reihe von Verfahren bekannt geworden, um die in Gasgemischen enthaltene Blausäure hydrolytisch in Gegenwart von Katalysatoren gemäß der Reaktionsgleichung

$$HCN + H_2O \rightarrow NH_3 + CO$$

in Ammoniak und Kohlenoxid zu zerlegen.

In der DE-A-2 352 425 ist ein Verfahren zur Entfernung von Blausäure und Ammoniak aus schwefelwasserstoffhaltigen Gasgemischen beschrieben, bei dem dieses bei Temperaturen über 538° C in Gegenwart eines Katalysators behandelt wird, der mindestens ein Sulfid eines Metalles der Gruppe Va, VIa, der dritten Periode der Gruppe VIII des Periodischen Systems oder der Seltenen Erden, das auf einem Trägermaterial aufgebracht ist, enthält. Hierbei wird die Blausäure zunächst zu Ammoniak hydrolysiert und letzteres in seine Elemente gespalten. Ein solches Verfahren eignet sich naturgemäß nicht für die Behandlung der stark ammoniakhaltigen Abgase der Melaminsynthese, da hierbei das Ammoniak in unerwünschter Weise zu nicht verwertbarem Stickstoff abgebaut wird.

In der DE-A-2 341 650 ist ein weiteres Verfahren zur Entfernung von Cyanwasserstoff aus Gasen, insbesondere schwefelwasserstoffhaltigen Gasen, z. B. Koksofengas, beschrieben, das darin besteht, daß man das Gas in Gegenwart eines Katalysators, der mindestens ein Alkalimetallhydroxid auf Aluminiumoxid, Siliciumdioxid, Aluminiumoxid-Siliciumdioxid oder Zeolithen als Träger enthält, mit zur Hydrolyse der Blausäure ausreichenden Mengen Wassers bei Temperaturen $> 93°$ C behandelt.

In der US-PS-2 817 580 ist ebenfalls ein Verfahren zur Entfernung von Blausäure aus Schwefelwasserstoff beschrieben, bei dem das Gasgemisch bei Temperaturen von 200 bis 400° C mit Wasserdampf in Gegenwart eines Katalysators aus $\gamma$-AlOOH bzw. $\gamma$-$Al_2O_3$ behandelt wird.

Schließlich ist aus der JP-A-53 005 065 auch ein Verfahren bekannt, bei dem die in Abgasen enthaltene Blausäure zunächst in Gegenwart eines Hydrolysierkatalysators in Ammoniak und Kohlenoxid umgewandelt wird und in einer zweiten Stufe das Ammoniak und Kohlenoxid in

Gegenwart eines Oxidationskatalysators zu Stickstoff und Kohlendioxid oxidiert werden. Als Hydrolysierkatalysator werden oxidische Katalysatoren eingesetzt, die mindestens ein Oxid der Elemente Aluminium, Cer, Titan, Zirkon, Magnesium, Calcium, Barium, Natrium, Kalium, Molybdän, Vanadium, Eisen, Kobalt, Nickel, Kupfer, Mangan, Silber und Lanthan enthalten. Auch dieses Verfahren läßt sich naturgemäß nur für solche Abgase einsetzen, das allenfalls geringe Mengen an Ammoniak enthält, da das Verfahren vorsieht, das durch Hydrolyse der Blausäure gebildete Ammoniak in einer zweiten Stufe zu Stickstoff zu oxidieren.

Es ist bisher kein Verfahren bekannt geworden, um die in den Reaktionsabgasen der Melaminsynthese in Spuren enthaltenen Verbindungen Blausäure, Isocyansäure bzw. Harnstoff und Melamin abzubauen. Wegen des hohen Ammoniakgehaltes dieser Abgase und aufgrund der Tatsache, daß bei der Hydrolyse dieser Verbindungen Ammoniak entsteht, war aufgrund des Massenwirkungsgesetzes nicht damit zu rechnen gewesen, daß ein hydrolytischer Abbau dieser in Spuren vorkommenden Verbindungen in den genannten Reaktionsabgasen überhaupt möglich ist. Wie eigene Untersuchungen ergeben haben, zeigen die oben aufgeführten Katalysatorsysteme eine befriedigende bis gute Reaktivität bezüglich des Abbaus von Blausäure in weitgehend ammoniak- und kohlendioxidfreien Gasgemischen, während ihre Wirksamkeit bei Gasgemischen, die in ihrer Zusammensetzung den Reaktionsabgasen der Melaminsynthese entsprechen, in der Regel völlig ungenügend wird. Dies gilt auch für den Abbau von Isocyansäure bzw. Harnstoff sowie Melamin sogar in ammoniak- und kohlendioxidfreien Gasgemischen.

Der vorliegenden Erfindung lag daher die Aufgabe zugrunde, ein Verfahren zum gleichzeitigen Abbau der Spurenbestandteile Cyanwasserstoff, Isocyansäure, Harnstoff und Melamin in den bei der thermischen Umwandlung von Harnstoff zu Melamin nach Abtrennung des Melamins anfallenden Reaktionsabgasen, die hauptsächlich aus Ammoniak und Kohlendioxid bestehen, bereitzustellen, bei dem es gelingt, die genannten Spurenbestandteile in einem Arbeitsgang auf einfachem, wirksamen und kontinuierlichen Wege abzubauen, ohne daß die Hauptbestandteile des Abgases, Kohlendioxid und insbesondere Ammoniak angegriffen werden.

Es wurde gefunden, daß diese Aufgabe dadurch gelöst werden kann, wenn man CuO und/oder $Fe_2O_3$ enthaltende Katalysatoren einsetzt und die Reaktionsabgase über die Katalysatoren in Gegenwart von Wasserdampf bei Temperaturen von 100 bis 500° C leitet.

Der Blausäuregehalt der Reaktionsabgase der Melaminsynthese liegt in der Regel unter 1000 mg/Nm$^3$, üblicherweise bei 20 bis 120 mg/Nm$^3$, der Melamingehalt in der Regel unter 100 mg/Nm$^3$, üblicherweise bei 5 bis 20 mg/Nm$^3$ sowie der Harnstoff- bzw. Isocyansäuregehalt in der Regel unter 10 000 mg/Nm$^3$ üblicherweise bei 500 bis 1500 mg/Nm$^3$. Harnstoff zerfällt bei höheren Temperaturen in Ammoniak und Isocyansäure, die bei niedrigeren Temperaturen wieder zu Harnstoff rekombinieren können, so daß je nach der Temperatur des Reaktionsabgases entweder Harnstoff oder Isocyansäure/Ammoniak oder deren Gemische vorliegen.

Für den hydrolytischen Abbau der genannten Spurenbestandteile muß in dem Abgas mindestens die stöchiometrisch erforderlichen Wasserdampfmenge vorhanden sein, um die einzelnen Bestandteile gemäß den Gleichungen

(1) $HCN + H_2O \rightarrow CO + NH_3$

(2) $C_3N_3(NH_2)_3 + 6\ H_2O \rightarrow 3\ CO_2 + 6\ NH_3$

(3) $CO(NH_2)_2 + H_2O \rightarrow CO_2 + 2\ NH_3$ bzw.

$HNCO + H_2O \rightarrow CO_2 + NH_3$

zu hydrolysieren. Zweckmäßigerweise arbeitet man, um eine vollständige Hydrolyse der Spurenbestandteile zu gewährleisten, mit einem Überschuß an Wasserdampf, d. h. mit einem Wasserdampfgehalt im Reaktionsabgas, der mindestens 10% über der stöchiometrisch erforderlichen Menge liegt. In der Regel enthalten die Reaktionsabgase genügend Wasserdampf, um dieser Bedingung zu genügen, d. h. sie enthalten je nach Betriebsbedingungen ca. 0,1 bis 2,0 Vol-% Wasserdampf, wobei unter Annahme des obengenannten maximalen Gehaltes an Spurenbestandteilen eine Wasserdampfmenge von 1 Vol-% ausreichen würde. Selbstverständlich kann auch ein höherer Wasserdampfgehalt eingehalten werden. Bei Reaktionsabgasen, die einen zu geringen Wasserdampfgehalt aufweisen, ist es daher notwendig, diese vor der katalytischen Behandlung zu befeuchten. Selbstverständlich ist die erfindungsgemäße katalytische Behandlung der Reaktionsabgase der Melaminsynthese nicht auf die obengenannten Gehalte an Spurenbestandteilen beschränkt, sondern sie läßt sich auch dann noch durchführen — bei entsprechend erhöhten Wasserdampfgehalten — wenn beispielsweise bei Betriebsstörungen der Melaminsynthese die eine oder andere Komponente bzw. alle Komponenten in erheblich höheren Konzentrationen vorliegen.

Die Kupfer- bzw. Eisenoxid-Katalysatoren, bei denen es sich um CuO- bzw. $Fe_2O_3$-Katalysatoren handelt, können entweder als solche oder aber zweckmäßig auf Trägern aufgebracht eingesetzt werden. Im Falle des Einsatzes von Kupferoxid enthaltenden Katalysatoren kann es möglich sein, daß

während des Betriebes durch das im Reaktionsgas in großem Überschuß enthaltene Ammoniak das Kupferoxid zumindest teilweise in Kupfernitrid umgewandelt wird.

Beim Einsatz von Eisenoxidkatalysatoren kann das $Fe_2O_3$ zu $Fe_3O_4$ reduziert werden.

Die Katalysatoren können je nach Reaktortyp und der gewünschten Gasbelastung in Form von Pillen, Strangpreßlingen, Ringen oder Kugeln verschiedenen Durchmessers eingesetzt werden.

Grundsätzllcich ist zu sagen, daß Kupferoxid enthaltende Katalysatoren aktiver sind als Katalysatoren, die als Aktivkomponente Eisenoxid allein enthalten. Dies bedeutet, daß man im Falle von Trägerkatalysatoren diese bei vergleichbarer Aktivität mit geringeren Kupferoxidmengen beaufschlagen kann. So sind Trägerkatalysatoren bereits bei Kupfergehalten von 0,5 Gew.-% Cu ebenso aktiv wie Katalysatoren mit Gehalten von 5 Gew.-% Eisen, vergleichbare Bedingungen vorausgesetzt. Kupfer enthaltende Katalysatoren sollten vorteilhaft mindestens 0,5 Gew.-% Kupfer, während Katalysatoren mit Eisenoxid als Aktivkomponente hingegen vorteilhaft mindestens 5 Gew.-% Fe aufweisen sollten.

Als Trägermaterialien kommen an sich bekannte keramische Oxide in Betracht, wie Aluminiumoxid, titandioxid, Zinkoxid, Zirkondioxid oder deren Mischungen oder Verbindungen wie Spinelle, Alumosilikate, Tonerden bzw. Tonerdehydrate.

Die Katalysatoren können durch Tränkung bzw. Fällung hergestellt werden.

Bei der Herstellung durch Tränkung wird der Träger mit Salzen des Kupfers und/oder Eisens, insbesondere den Nitraten getränkt, anschließend getrocknet und bei Temperaturen oberhalb 450° C calciniert.

Im Falle der Fällungskatalysatoren umfaßt die Herstellung folgende Verfahrensschritte: Herstellen der Metallsalzlösung, z. B. der Nitratlösung des betreffenden Metalles, Herstellen der Ausgangslösungen für die Trägermasse, wie z. B. Aluminiumsalzlösungen, Verunreinigung der Lösungen und Fällen der Katalysatorvorstufe mit Basen wie Soda oder Hydroxiden, Filtration und Abpressen des Niederschlags, Verformen der Katalysatormasse, Trocknen und Calcinieren.

Zur Verbesserung der mechanischen Eigenschaften der Katalysatoren hat es sich als zweckmäßig erwiesen, den Trägermassen 5 bis 25 Gew.-% Chromoxid ($Cr_2O_3$) zuzusetzen bzw. in diese einzuarbeiten.

Bei der erfindungsgemäßen Behandlung der Reaktionsabgase wählt man vorzugsweise Temperaturen von 150 bis 300° C. Die Raumgeschwindigkeit kann innerhalb weiter Grenzen variieren und kann, bezogen auf 1 bar und 0° C Werte von 100 bis 10 000 $h^{-1}$ annehmen. Der Druck, bei dem die erfindungsgemäße Behandlung durchgeführt wird, stellt keine kritische Größe dar. Üblicherweise wird man allerdings einen nur so hohen Druck wählen, um eine Gasströmung aufrechtzuerhalten und den Strömungswiderstand des Katalysators im Reaktionsraum zu überwinden.

Ein besonders bevorzugter Katalysator ist ein Kupferoxid enthaltender Trägerkontakt, der 4 bis 5 Gew.-% Kupfer enthält und durch Tränken von Kugeln aus $\gamma$- oder $\chi$-Aluminiumoxid hergestellt worden ist.

Mit Hilfe des erfindungsgemäßen Verfahrens gelingt es, die Spurenbestandteile Blausäure, Isocyansäure bzw. Harnstoff sowie Melamin aus den Reaktionsabgasen der Melaminsynthese weitgehend zu entfernen, ohne daß die Hauptbestandteile des Gases, Kohlendioxid und insbesondere Ammoniak in merklichem Maße mit abgebaut werden. Die Katalysatoren werden durch die Bestandteile des Gases nicht vergiftet und erreichen deshalb mehrjährige Standzeiten. Auch andere Bestandteile, die in den Reaktionsabgasen vorkommen können, wie Methan, Stickstoff, Kohlenoxid, Sauerstoff oder Argon, beeinträchtigen das erfindungsgemäße Verfahren nicht.

## Beispiel 1

Durch einen röhrenförmigen, beheizten Ofen leitet man ein Gasgemisch, wie es bei der Melaminherstellung aus Harnstoff anfällt, mit einer Raumgeschwindigkeit von 1000 $h^{-1}$, einem Gasdruck von 1,3 bar und einer Ofeneintrittstemperatur von 198° C. Der Ofen enthält Kupferoxid-Fällungskatalysator in Form von Tabletten mit 4 mm Durchmesser. Die mittlere Katalysatortemperatur beträgt dabei 250° C. Die genaue Katalysatorzusammensetzung sowie weitere Verfahrensparameter sind in Tabelle 1 zusammengefaßt. Die Zusammensetzung des Gasgemisches vor und nach Katalysatorzone wird mit Hilfe üblicher photometrischer, volumetrischer bzw. gaschromatographischer Methoden bestimmt und ergibt für den HCN-, Melamin- sowie den als Summe ermittelten (HNCO-Harnstoff)-Abbau Werte von 97,90 bzw. 85%.

## Beispiel 2

2,5 $Nm^3$ des bei der thermischen Umwandlung von Harnstoff zu Melamin anfallenden Reaktionsabgases werden stündlich unter einem Absolutdruck von 2,0 bar und einer Temperatur von 200° C einem zylinderförmigen, dampfbeheizten Reaktor mit 2 l Kupferoxid-Tränkkatalysator von unten zugeführt. Der Katalysator wird durch Tränken von 5 mm-$\chi$-Aluminiumoxidkugeln mit Kupfernitratlö-

sung hergestellt und weist nach Calcination einen Kupfergehalt von 4,7 Gew.-% auf.

Die mittlere Katalysatortemperatur beträgt 250° C.

Gaszusammensetzung vor und nach Reaktor, genaue Katalysatorzusammensetzung, Betriebsdauer, Belastung sowie die Abbaugrade für die zu entfernenden Nebenbestandteile des Abgases sind in Tabelle 1 wiedergegeben.

Das am Kopf des Reaktors mit einer Temperatur von 245°C und einem Druck von 1,9 bar entnommene praktische HCN-, Melamin-, HNCO- und Harnstoff-freie Gasgemisch kann für die Synthese von Ammoniumnitrat oder Harnstoff verwendet werden.

## Beispiel 3

Der Wassergehalt des Reaktionsabgases der Melaminsynthese wird durch Zugabe von Wasserdampf auf 5 Vol-% eingestellt. Anschließend leitet man dieses Gasgemisch mit einer Raumgeschwindigkeit von 1200 $h^{-1}$ durch ein Katalysatorbett mit Kupferoxid-Tränkkontakt, der umgerechnet 3,5 Gew.-% Kupfer als Aktivkomponente auf $\gamma$-Aluminiumoxidkugeln als Trägermasse enthält. Bei einer mittleren Katalysatortemperatur von 200° C werden während einer Versuchsdauer von 6 Monaten die HCN-, Melamin- sowie HNCO- und Harnstoff-Nebenbestandteile zu 85 bis 96% abgebaut.

Tabelle 1

| | Beispiel 1 | Beispiel 2 | Beispiel 3 |
|---|---|---|---|
| Durchschnittliche Gaszusammensetzung vor Katalysatorzone: | | | |
| Ammoniak (Vol.-%) | 66,4 | 69,0 | 67,7 |
| Kohlendioxid (Vol.-%) | 32,5 | 30,0 | 27,1 |
| Wasserdampf (Vol.-%) | 1,0 | 0,9 | 5,0 |
| Cyanwasserstoff (mg/$Nm^3$) | 67 | 100 | 70 |
| Melamin (mg/$Nm^3$) | 2 | 3 | 16 |
| Isocyansäure + Harnstoff (mg/$Nm^3$) | 500 | 1350 | 1400 |
| Durchschnittliche Gaszusammensetzung nach Katalysatorzone: | | | |
| Ammoniak (Vol.-%) | 66,5 | 69,1 | 67,9 |
| Kohlendioxid (Vol.-%) | 32,5 | 30,1 | 27,2 |
| Wasserdampf (Vol.-%) | 0,8 | 0,7 | 4,7 |
| Cyanwasserstoff (mg/$Nm^3$) | 2 | <0,1 | 3 |
| Melamin (mg/$Nm^3$) | 0,2 | <0,05 | 2 |
| Isocyansäure + Harnstoff (mg/$Nm^3$) | 75 | 81 | 210 |
| Mittlere Katalysatortemperatur (°C) | 250 | 250 | 200 |
| Raumgeschwindigkeit (Belastung) ($h^{-1}$) | 1000 | 1250 | 1200 |
| Mindestbetriebsdauer (d) | 180 | 180 | 180 |
| Durchschnittl. Cyanwasserstoffabbau (%) | 97 | 99–100 | 96 |
| Durchschnittl. Melaminabbau (%) | 90 | 98–99 | 87,5 |

Fortsetzung

| | Beispiel 1 | Beispiel 2 | Beispiel 3 |
|---|---|---|---|
| Durchschnittl. Isocyansäure + Harnstoff-abbau (%) | 85 | 94 | 85 |
| Katalysatoreigenschaften: | | | |
| Typ und Form | Fällungskontakt Tabletten: 4 mm Ø | Tränkkontakt auf $x$-$Al_2O_3$-kugeln: 5 mm Ø | Tränkkontakt $\gamma$-$Al_2O_3$-kugeln: 3 mm Ø |
| Schüttmasse (g/l) | 1000 | 850 | 700 |
| spez. Oberfläche ($m^2/g$) | 200 | 250 | 210 |
| Porenvolumen ($cm^3/g$) | 0,6 | 0,7 | 0,6 |
| Katalysatorzusammensetzung: | | | |
| Kupferoxid in Gew.-% Cu | 30,0 | 4,7 | 3,5 |
| Aluminiumoxid in Gew.-% Al | 33,0 | 49,8 | 50,6 |

Beispiel 4

7000 $Nm^3$ des bei der thermischen Umwandlung von Harnstoff in Melamin anfallenden und zusätzlich befeuchteten, Reaktionsabgases werden stündlich mit einem Absolutdruck von 1,2 bar einem Reaktor mit 10 t Fällungskatalysator von unten zugeführt. Die genaue Katalysatorzusammensetzung sowie weitere Verfahrensparameter sind in Tabelle 2 aufgeführt.

Die Zusammensetzung des Gasgemisches vor und nach Katalysatorzone wird mit Hilfe photometrischer, volumetrischer bzw. gaschromatographischer Methoden wöchentlich einmal bestimmt und ergibt für den HCN-, Melamin- sowie den als Summe ermittelten (HNCO + Harnstoff)-Abbau während einer Betriebsdauer von ca. zwei Jahren konstante Werte von 96, 90 bzw. 87%.

Beispiel 5

Der Wassergehalt des Reaktionsabgases der Melaminsynthese wird durch Zugabe von Wasserdampf auf 5 Vol.-% eingestellt. Anschließend leitet man dieses Gasgemisch mit einer Raumgeschwindigkeit von 1200 $h^{-1}$ durch einen Festbettreaktor, der 8000 kg Eisenoxid-Fällungskatalysator in Form von Strangpreßlingen von etwa 5 mm Durchmesser und 10 mm Länge enthält. Das Gas steht unter einem Absolutdruck von 2 bar und weist nach Verlassen der Katalysatorschüttung eine Temperatur von 276° C und einen Absolutdruck von 1,9 bar auf.

Weitere Verfahrensparameter sowie die genaue Katalysatorzusammensetzung sind in Tabelle 2 angegeben.

Das am Kopf des Reaktors entnommene praktisch HCN-, Melamin-, HNCO- und Harnstoff-freie Gasgemisch kann für die Synthese von Ammoniumnitrat oder Harnstoff verwendet werden.

Beispiel 6

Durch einen Versuchsofen läßt man ein Gasgemisch, wie es bei der Melamindarstellung aus Harnstoff anfälle, mit einer Raumgeschwindigkeit von 2000 $h^{-1}$, einem Gasdruck von 4 bar (absolut) und einer Ofeneintrittstemperatur von 205° C strömen. Der Ofen enthält 5 l Eisenoxid-Kontakt in Form von Kugeln mit etwa 6 mm Durchmesser.

Die genaue Katalysatorzusammensetzung, weitere Verfahrensparameter sowie die Gasanalysen vor bzw. nach Ofen sind wieder in Tabelle 2 angegeben. Bei einer mittleren Katalysatortemperatur von 220° C werden während einer Versuchsdauer von 6 Monaten die HCN-, Melamin- sowie Isocyansäure- bzw. Harnstoff-Spuren im Abgasgemisch zu 85 bis 95% abgebaut.

Tabelle 2

| | Beispiel 4 | Beispiel 5 | Beispiel 6 |
|---|---|---|---|
| Durchschnittliche Gaszusammensetzung vor Katalysatorzone: | | | |
| Ammoniak (Vol.-%) | 67,0 | 66,1 | 63,7 |
| Kohlendioxid (Vol.-%) | 29,0 | 28,8 | 34,1 |
| Wasserdampf (Vol.-%) | 3,9 | 5,0 | 2,1 |
| Cyanwasserstoff (mg/$Nm^3$) | 100 | 67 | 86 |
| Melamin (mg/$Nm^3$) | 3 | 2 | 1 |
| Isocyansäure + Harnstoff (mg/$Nm^3$) | 800 | 400 | 1400 |
| Durchschnittliche Gaszusammensetzung nach Katalysatorzone: | | | |
| Ammoniak (Vol.-%) | 67,2 | 66,2 | 63,9 |
| Kohlendioxid (Vol.-%) | 29,1 | 28,9 | 34,2 |
| Wasserdampf (Vol.-%) | 3,6 | 4,8 | 1,8 |
| Cyanwasserstoff (mg/$Nm^3$) | 4 | 2 | 4 |
| Melamin (mg/$Nm^3$) | 0,3 | ca. 0,1 | ca. 0,1 |
| Isocyansäure + Harnstoff (mg/$Nm^3$) | 104 | 36 | 210 |
| Mittlere Katalysatortemperatur (°C) | 250 | 280 | 220 |
| Raumgeschwindigkeit (Belastung) ($h^{-1}$) | 700 | 1200 | 2000 |
| Mindestbetriebsdauer (d) | 700 | 700 | 180 |
| Durchschnittl. Cyanwasserstoffabbau (%) | 96 | 97 | 95 |
| Durchschnittl. Melaminabbau (%) | 90 | 95 | 90 |
| Durchschnitt. Isocyansäure + Harnstoff-abbau (%) | 87 | 91 | 85 |
| Katalysatoreigenschaften: | | | |
| Form | Tabletten: 9 × 9 mm | Strangpreßlinge: 5 × 10 mm | Kugeln: 6 mm ∅ |
| Schüttmasse (g/l) | 1000 | 1100 | 900 |
| spez. Oberfläche ($m^2$/g) | 65 | 70 | 120 |
| Porenvolumen ($cm^3$/g) | 0,45 | 0,5 | 0,6 |
| Katalysatorzusammensetzung: | | | |
| Eisenoxid in Gew.-% Fe | 57,5 | 69,1 | 30,2 |

Fortsetzung

| | Beispiel 4 | Beispiel 5 | Beispiel 6 |
|---|---|---|---|
| Katalysatorzusammensetzung: | | | |
| Chromoxid in Gew.-% Cr | 7,0 | – | – |
| Aluminiumoxid in Gew.-% Al | 2,4 | 0,3 | 30,0 |
| Siliziumoxid in Gew.-% Si | – | 0,1 | – |
| Calciumoxid in Gew.-% Ca | – | 0,3 | – |
| Graphit in Gew.-% C | ca. 3 | – | – |

Beispiel 7

Durch einen zylinderförmigen Ofen leitet man ein Gasgemisch, wie es bei der Melaminherstellung aus Harnstoff anfällt, mit einer Raumgeschwindigkeit von 2000 $h^{-1}$ und einem Gasdruck von 2 bar absolut. Der Ofen enthält einen Kupferoxid/Eisenoxid-Mischkatalysator in Form von Kugeln mit 4 mm Durchmesser. Die mittlere Katalysatortemperatur beträgt 210° C. Weitere Verfahrensparameter sowie die genaue Katalysatorzusammensetzung sind in Tabelle 3 wiedergegeben.

Während einer Versuchsdauer von 6 Monaten werden die HCN-, Melamin- sowie HCNCO- bzw. Harnstoff-Spurenbestandteile zu 98 bis 87% abgebaut.

Tabelle 3

| | Beispiel 7 |
|---|---|
| Durchschnittliche Gaszusammensetzung vor Katalysatorzone: | |
| Ammoniak (Vol.-%) | 66,0 |
| Kohlendioxid (Vol.-%) | 33,0 |
| Wasserdampf (Vol.-%) | 1,0 |
| Cyanwasserstoff (mg/$Nm^3$) | 50 |
| Melamin (mg/$Nm^3$) | 1 |
| Isocyansäure + Harnstoff (mg/$Nm^3$) | 800 |
| Durchschnittliche Gaszusammensetzung nach Katalysatorzone: | |
| Ammoniak (Vol.-%) | 66,1 |
| Kohlendioxid (Vol.-%) | 33,1 |
| Wasserdampf (Vol.-%) | 0,8 |
| Cyanwasserstoff (mg/$Nm^3$) | 1 |
| Melamin (mg/$Nm^3$) | ca. 0,05 |
| Isocyansäure + Harnstoff (mg/$Nm^3$) | 102 |

Fortsetzung

| | Beispiel 7 |
|---|---|
| Mittlere Katalysatortemperatur (°C) | 210 |
| Raumgeschwindigkeit (Belastung) ($h^{-1}$) | 2000 |
| Mindestbetriebsdauer (d) | 180 |
| Durchschnittl. Cyanwasserstoffabbau (%) | 98 |
| Durchschnittl. Melaminabbau (%) | 95 |
| Durchschnittl. Isocyansäure + Harnstoff (%) | 87 |
| Katalysatoreigenschaften: | |
| Form | Kugeln 4 mm ∅ |
| Schüttmasse (g/l) | 980 |
| spez. Oberfläche ($m^2/g$) | 210 |
| Porenvolumen ($cm^3/g$) | 0,6 |
| Katalysatorzusammensetzung: | |
| Kupferoxid in Gew.-% Cu | 3,2 |
| Eisenoxid in Gew.-% Fe | 7,5 |
| Aluminiumoxid in Gew.-% Al | 45,1 |

Vergleichsbeispiel

Um die Wirksamkeit der erfindungsgemäßen Katalysatoren für die Reinigung der Reaktionsabgase der Melaminsynthese zu veranschaulichen, wird der in Beispiel 1 beschriebene Reaktor mit verschiedenen, in der folgenden Tabelle 3 wiedergegebenen Katalysatoren beschickt, die zur Entfernung von Blausäure aus anderen Gasgemischen bekannt geworden sind. In Versuchen 1 und 2 werden Katalysatoren eingesetzt, wie sie in der US-A-2 817 580, in Versuch 3 wie sie in der DE-A-2 341 650 und in Versuchen 5 bis 9 wie sie in der JP-A-53 005 065 beschrieben sind.

Die mittlere Katalysatortemperatur beträgt einheitlich bei allen Versuchen 280°C, die Raumgeschwindigkeit 1000 $h^{-1}$, die Betriebsdauer jeweils 7 Tage.

Die Aktivität wird geprüft mit

a) einem Abgas der Melaminsynthese mit

| | |
|---|---|
| 66 Vol.-% | Ammoniak |
| 30 Vol.-% | Kohlendioxid |
| 4 Vol.-% | Wasserdampf |
| 100 mg/$Nm^3$ | Blausäure |
| 10 mg/$Nm^3$ | Melamin |
| 1000 mg/$Nm^3$ | Isocyansäure + Harnstoff |

sowie

b) einem $CO_2$- und $NH_3$-freien Vergleichsgas aus

| | |
|---|---|
| 96 Vol.-% | Stickstoff |
| 4 Vol.-% | Wasserdampf |

| | |
|---|---|
| 100 mg/$Nm^3$ | Blausäure |
| 10 mg/$Nm^3$ | Melamin |
| 1000 mg/$Nm^3$ | Isocyansäure + Harnstoff. |

Die Ergebnisse dieser Vergleichsversuche sind in der folgenden Tabelle 4 veranschaulicht.

Tabelle 4

| Vers. Nr. | Katalysatorsystem | Abgas der Melaminsynthese | | | Kohlendioxid- und Ammoniak-freies Vergleichsgas | | |
|---|---|---|---|---|---|---|---|
| | | HCN-Abbau | Melamin-Abbau | Isocyan-säure + Harnstoff-Abbau | HCN-Abbau | Melamin-Abbau | Isocyan-säure + Harnstoff-Abbau |
| | | % | % | % | % | % | % |
| 1 | γ-AlOOH[1]) | 20 | 40 | 40 | 95 | 35 | 50 |
| 2 | γ-Aluminiumoxid[1]) | 15 | 30 | 37 | 89 | 31 | 54 |
| 3 | Aluminiumoxid mit 10 Gew.-% KOH[2]) | 5 | 70 | 40 | 98 | 70 | 45 |
| 4 | Siliziumdioxid mit 5 Gew.-% NaOH[2]) | 2 | 55 | 35 | 50 | 60 | 41 |
| 5 | Molybdänoxid (6 Gew.-% Mo) Rest Aluminium-oxid[3]) | 17 | 40 | 30 | 80 | 45 | 40 |
| 6 | Cobaltoxid (10 Gew.-% Co) Rest Aluminium-oxid[3]) | 33 | 30 | 10 | 89 | 45 | 35 |
| 7 | Nickeloxid (6 Gew.-% Ni) Rest Aluminium-oxid[3]) | 34 | 32 | 7 | 98 | 66 | 33 |
| 8 | Manganoxid (7 Gew.-% Mn) Rest Aluminium-oxid[3]) | 19 | 41 | 33 | 85 | 51 | 33 |
| 9 | Silberoxid (2 Gew.-% Ag) Rest Aluminium-oxid[3]) | 35 | 60 | 31 | 98 | 60 | 45 |

[1]) Vgl. US-A- 2 817 560.
[2]) Vgl. DE-A- 2 341 690.
[3]) Vgl. JP-A- 58 005 065.

Aus der Tabelle 4 ist zu ersehen, daß die dort angeführten Katalysatorsysteme in Kohlendioxid- und Ammoniak-freiem Vergleichsgas bezüglich des Blausäureabbaus bis auf einen völlig unzureichenden Wert (Versuch 4) neben weniger befriedigenden Abbauwerten (<90%) auch gute Abbauwerte (>90%) zeigen. Der Melamin- und Isocyansäure- bzw. Harnstoffabbau ist jedoch in jedem Fall unbefriedigend. Dagegen sind sämtliche Abbauwerte aller 3 Bestandteile bei dem Reaktionsabgas der Melaminsynthese als völlig unzureichend zu bezeichnen. Aus der Tabelle ist sehr anschaulich zu

ersehen, daß die Wirksamkeit der Katalysatoren sehr von der Zusammensetzung des zu behandelnden Abgases abhängt und durch von vornherein anwesende hohe Anteile der Hydrolyseprodukte der Spurenbestandteile ungünstig beeinflußt wird.

## Patentansprüche

1. Verfahren zum gleichzeitigen Abbau der Spurenbestandteile Cyanwasserstoff, Isocyansäure, Harnstoff und Melamin in den bei der thermischen Umwandlung von Harnstoff zu Melamin nach Abtrennung des Melamins anfallenden Reaktionsabgasen, die hauptsächlich aus Ammoniak und Kohlendioxid bestehen, dadurch gekennzeichnet, daß man CuO und/oder $Fe_2O_3$ enthaltende Katalysatoren einsetzt und die Reaktionsabgase über die Katalysatoren in Gegenwart von Wasserdampf bei Temperaturen von 100 bis 500° C leitet.
2. Verfahren nach Anspruch 1, dadurch gekennzeichnet, daß das Kupferoxid und/oder Eisenoxid auf Trägern aufgebracht ist.
3. Verfahren nach Anspruch 2, dadurch gekennzeichnet, daß der Katalysator mindestens 0,5 Gew.-% Kupfer enthält.
4. Verfahren nach Anspruch 2, dadurch gekennzeichnet, daß der Katalysator mindestens 5 Gew.-% Eisen enthält.
5. Verfahren nach Ansprüchen 2 bis 4, dadurch gekennzeichnet, daß die Träger keramische Oxide sind.
6. Verfahren nach Ansprüchen 2 bis 5, dadurch gekennzeichnet, daß die Träger 5 bis 25 Gew.-% Chromoxid ($Cr_2O_3$) enthalten.
7. Verfahren nach Ansprüchen 1 bis 6, dadurch gekennzeichnet, daß man die Behandlung bei Temperaturen von 150 bis 300° C durchführt.
8. Verfahren nach Ansprüchen 1 bis 7, dadurch gekennzeichnet, daß man die Reaktionsabgase mit einer Raumgeschwindigkeit von 100 bis 10 000 $h^{-1}$ über die Katalysatoren leitet.

## Claims

1. A process for the simultaneous destruction of the trace components hydrogen cyanide, isocyanic acid, urea and melamine in the reaction off-gas, consisting mainly of ammonia and carbon dioxide, which is left after thermal conversion of urea to melamine and isolation of the melamine, wherein a catalyst containing CuO and/or $Fe_2O_3$ is used, and the off-gas is passed over the catalyst in the presence of steam at from 100 to 500° C.
2. A process as claimed in claim 1, wherein the copper oxide and/or iron oxide is applied to a carrier.
3. A process as claimed in claim 2, wherein the catalyst contains not less than 0.5% by weight of copper.
4. A process as claimed in claim 2, wherein the catalyst contains not less than 5% by weight of iron.
5. A process as claimed in claims 2 to 4, wherein the carrier is a ceramic oxide.
6. A process as claimed in claims 2 to 5, wherein the carrier contains from 5 to 25% by weight of chronium oxide ($Cr_2O_3$).
7. A process as claimed in claims 1 to 6, wherein the treatment is carried out at from 150 to 300° C.
8. A process as claimed in claims 1 to 7, wherein the off-gas is passed over the catalyst at a space velocity of from 100 to 10 000 $h^{-1}$.

## Revendications

1. Procédé pour la décomposition simultanée des constituants acide cyanhydrique, acide isocyanique urée et mélamine, présents à l'état de trace dans les gaz résiduaires de réaction obtenus, après séparation de la mélamine, dans la transformation thermique d'urée en mélamine, gaz résiduaires qui se composent essentiellement d'ammoniac et d'anhydride carbonique, caractérisé en ce qu'on utilise des catalyseurs contenant CuO et/ou $Fe_2O_3$ et en ce qu'on fait passer les gaz résiduaires de réaction sur les catalyseurs en présence de vapeur d'eau, à des températures de 100 à 500° C.
2. Procédé selon la revendication 1, caractérisé en ce que l'oxyse de cuivre et/ou l'oxyde de fer sont fixés sur des supports.
3. Procédé selon la revendication 2, caractérisé en ce que le catalyseur contient au moins 0,5% en poids de cuivre.
4. Procédé selon la revendication 2, caractérisé en ce que le catalyseur contient au moins 5% en poids de fer.
5. Procédé selon l'une quelconque des revendications 2 à 4, caractérisé en ce que les supports sont des oxydes céramiques.

6. Procédé selon l'une quelconque des revendications 2 à 5, caractérisé en ce les supports contiennent 5 à 25% en poids d'oxyde de chrome ($Cr_2O_3$).

7. Procédé selon l'une quelconque des revendications 1 à 6, caractérisé en ce qu'on conduit le traitement à une température comprise entre 150 et 300° C.

8. Procédé selon l'une quelconque des revendications 1 à 7, caractérisé en ce qu'on fait passer les gaz résiduels de réaction sur les catalyseurs à une vitesse spatiale de 100 à 10 000 $h^{-1}$.